# EUROPÄISCHE PATENTANMELDUNG

(11) **EP 1 177 874 A1**
(43) Veröffentlichungstag der Anmeldung: **06.02.2002**
(21) Anmeldenummer: 00116182.7
(22) Anmeldetag: 02.08.2000
(51) Int. Cl.: B29C 45/14, B44C 1/17, B41M 5/035

(54) **Trägerfolie für den Sublimationstransfer und Verwendung derselben**

(71) Anmelder: MZE Engineering GmbH, 26160 Bad Zwischenahn (DE)
(72) Erfinder: Zaher, Maximilian, 26125 Oldenburg (DE); Walter, Thomas Dr., D-26129 Oldenburg (DE)
(74) Vertreter: von Hellfeld, Axel, Dr. Dipl.-Phys.

(57) **Zusammenfassung**

Eine Trägerfolie für den Sublimationstransfer von Farbe weist eine Polyesterfolie (12) mit einer Lackschicht (14) darauf auf. Auf die Lackschicht (14) kann ein Farbdekor (16) aus sublimierbaren Farbstoffen aufgetragen werden.

## Beschreibung

Die Erfindung betrifft eine Trägerfolie für den Sublimationstransfer von Farbe.

Es ist im Stand der Technik bekannt, mittels des sogenannten Sublimationstransfers farbige Dekore von einem Träger auf ein zu dekorierendes Substrat zu übertragen. Die Übertragung (also der Transfer) erfolgt derart, daß der Träger in enge Anlage an das zu dekorierende Substrat gebracht wird und daß unter Wärmeeinwirkung die Farben sublimieren und dabei vom Träger weitgehend auf das Substrat übergehen. Auf diese Weise können Substrate (Gegenstände) aus unterschiedlichsten Materialien farbig dekoriert werden, insbesondere Kunststoffe und lackbeschichtete Substrate.

Bei dem Sublimationstransfer geht also ein Farbdekor vom Träger auf ein Substrat über, so daß anschließend das Substrat farbig dekoriert ist.

Im Stand der Technik werden in der Regel Papiere als Träger verwendet. Papiere haben aber den Nachteil, daß beim Sublimationstransfer ein hoher Farbverlust dadurch auftritt, daß ein hoher Anteil (z.B. 30%) der Farbe am oder im Papier verbleibt, also die Sublimation vom Träger auf das Substrat nicht vollständig ist.

Ein weiterer Nachteil von Papieren als Träger für den Sublimationstransfer liegt darin, daß häufig Spuren des Papiers auf dem dekorierten Substrat (Produkt) verbleiben, was die Qualität der Dekorierung mindert und auch die weitere Verarbeitung des Produktes unter Umständen nachteilig beeinflußt.

Kunststoffolien wurden bisher nicht erfolgreich, jedenfalls nicht mit qualitativ guten Ergebnissen, für den Sublimationstransfer verwendet.

Der Erfindung liegt die Aufgabe zugrunde, einen Träger für den Sublimationstransfer von Farbe bereitzustellen, der kostengünstig ist, der Prozeß einfach handhabbar macht und qualitativ hochwertig dekorierte Produkte liefert.

Hierzu stellt die Erfindung eine Trägerfolie für den Sublimationstransfer bereit, die aus einem Kunststoff besteht, der bis 150°C, bevorzugt 180°C formstabil ist, insbesondere Polyester, mit einer Lackschicht darauf besteht. Die Folie soll bis 180°C formstabil sein und insbesondere nicht schrumpfen.

Die Lackschicht dient als Sperrschicht bezüglich der Bewegung der Farbstoffmoleküle. Es hat sich herausgestellt, daß trotz der genannten Sperrschicht, insbesondere wenn diese Stärken im Bereich von 2-8 µm, insbesondere 3-4 µm hat, die Bedruckbarkeit einer Polyesterfolie nicht wesentlich beeinträchtigt ist.

Als Material für die Trägerfolie kommt insbesondere Polyester in Betracht, weil es bis 180°C ohne Schrumpfen stabil ist. Statt Polyester können aber auch andere Kunststoffe verwendet werden, die bis 180°C ohne merkliches Schrumpfen stabil sind.

Die Trägerfolie hat bevorzugt eine Stärke im Bereich von 10 bis 60 µm, je nach Anwendung.

Mit einer derartigen Trägerfolie läßt sich ein nahezu vollständiger Transfer der Farbe von der Trägerfolie auf das Substrat erreichen, es tritt also kein Farbverlust in der oben beschriebenen Weise auf.

Ein weiterer Vorteil liegt darin, daß große Farbmengen sublimiert (transferiert) werden können. Dies wiederum hat, insbesondere bei Dekorierung von lackierten Produkten oder Kunststoffen, den Vorteil, daß eine sehr starke Tiefenwirkung beim erzeugten Farbdekor erreicht wird. Die großen Farbmengen haben zufolge, daß die Farbstoffenmoleküle relativ weit in das Substrat eindringen. Bei Verwendung einer Polycarbonatoberfläche als Substrat wurden z.B. Eindringtiefen der Farbstoffmoleküle von mehr als 100 µm erreicht, was eine starke Tiefenwirkung der Dekoration zufolge hat.

Ein weiterer Vorteil der erfindungsgemäßen Trägerfolie ist das sie beim Sublimationstransfer wesentlich weniger kritisch auf eine exakte Einstellung der Temperatur reagiert, d.h. der Sublimationstransfer ist "temperaturtoleranter". Ein typischer Temperaturarbeitsbereich für die Sublimation ist bei den erfindungsgemäßen Trägerfolien der Bereich von 180° C bis 230° C. nach dem Sublimationstransfer verbleibt weder Farbe auf der Trägerfolie noch verbleiben Teile der Trägerfolie auf dem dekorierten Substrat, so daß die oben beschriebenen Probleme des Stands der Technik überwunden sind.

Die mit den erfindungsgemäßen Trägerfolien sublimierbaren großen Farbmengen und die damit mögliche große Eindringtiefe der Farbstoffmoleküle in das dekorierte Substrat haben weiterhin den Vorteil, daß das Substrat eine gute Verformbarkeit aufweist, ohne daß die Farbdekoration bei der Verformung leidet. Es wird auch eine hohe Lichtechtheit und Beständigkeit des Produktes erreicht. Insbesondere tritt bei einer Thermoverformung des Produktes (Substrates) keine Verbleichung auf.

Mit der erfindungsgemäßen Trägerfolie können relativ hochmolekulare Farben verwendet werden, was insbesondere bei der farbigen Dekorierung von thermoplastischen Produkten die Qualität fördert. Hochmolekulare Farben erfordern relativ hohe Sublimationstemperaturen (bis zu 250° C), was bei Papieren Probleme, insbesondere der eingangs genannten Art, bedingt. Mit den erfindungsgemäßen Trägerfolien sind relativ hohe Sublimationstemperaturen möglich, ohne daß Probleme auftreten.

Insbesondere bei der Dekorierung von Textilien bedeuten die erfindungsgemäß möglichen großen sublimierten Farbmengen, daß eine satte Dekorierung mit hoher Beständigkeit erreicht werden kann. Die Erfindung ermöglicht die Herstellung von Folien und Platten (als Substrate) die danach weitgehend verformt werden können, so ist z.B. mit den erfindungsgemäßen Trägerfolien die farbige Dekorierung von Folien oder Platten aus ABS möglich, wobei die dekorierten Platten stark verformt werden können.

Als Material für die Lackschicht wird bevorzugt ein Lack der PVDF-Familie verwendet (PVDF = Polyvinylidenfluorid). Ebenfalls geeignet sind Lacke der MF-Familie (MF = Melaminformaldehydkondensat). Weiterhin ist als Material für die Lackschicht ein Lack der PF-Familie geeignet (PF = Phenolformaldehydkondensat).

Nachfolgend wird ein Ausführungsbeispiel der Erfindung anhand der Zeichnung näher beschrieben. Es zeigt:
- Fig. 1: schematisch eine Trägerfolie ohne Farbdekor;
- Fig. 2: eine Trägerfolie mit Farbdekor;
- Fig. 3: eine Trägerfolie gemäß Fig. 2 in Anlage an einem farbig zu dekorierenden Substrat.

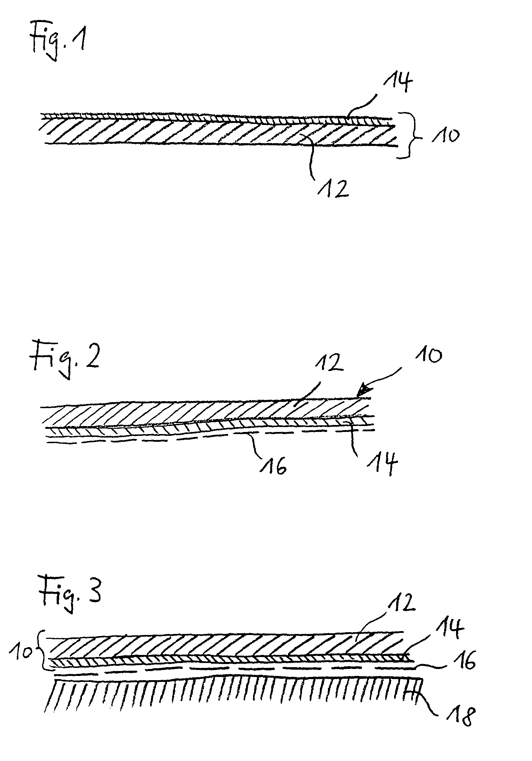

Eine Trägerfolie 10 besteht gemäß Fig. 1 aus einer Polyesterfolie 12 mit einer Lackschicht 14 darauf. Die Lackschicht hat beim Ausführungsbeispiel eine Stärke von 3-4 µm. Sie wirkt als Sperrschicht hinsichtlich der Farb-Sublimation, d.h. sie bewirkt für die Farbstoffmoleküle eine Barriere in Rückrichtung, so daß die Farbstoffmoleküle in gewünschter Weise auf ein zu dekorierendes Substrat übergehen (vgl. Fig. 3).

Als Material für die Lackschicht 14 werden die oben genannten Lacke bevorzugt eingesetzt.

Die Trägerfolie 10 gemäß Fig. 1 ist gut mit einem Farbdekor 16 in herkömmlicher Weise bedruckbar. Das Farbdekor 16 kann auch mit der sogenannten "Release"-Technik von einem Träger (nicht gezeigt) auf die lackierte Polyesterfolie 12 übertragen werden. Die "Release"-Technik ist als solche bekannt ( z.B. EP 0 573 676 A1) .

Fig. 2 zeigt die Trägerfolie 10 gemäß Fig. 1, bestehend aus Polyesterfolie 12 und Lackschicht 14, mit einem aufgebrachten Farbdekor 16. Das Farbdekor 14 besteht aus sublimierbaren Farbstoffen, die als solche bekannt sind. Bei erhöhten Temperaturen, bei den erfindungsgemäßen Beispielen bis zu 250° C, sublimieren die Farbstoffmoleküle und gehen so auf ein zu dekorierendes Substrat über.

Dies ist schematisch in Fig. 3 dargestellt. Die Trägerfolie 10 mit dem zu sublimierenden Farbdekor 16 darauf wird auf das zu dekorierende Substrat 18 so aufgelegt, daß das Farbdekor 16 in direkter Anlage auf der Oberfläche des Substrates 18 aufliegt. Bei Temperaturerhöhung findet die genannte Sublimation statt.

Als Substrate sind insbesondere bei Verwendung der beschriebenen Trägerfolien mit guten Ergebnissen geeignet: lackierte Bleche, Teppiche, Gardinen, Textilmaterialien und insbesondere Kunststoffe.

## Patentansprüche

1. Trägerfolie für den Sublimationstransfer von Farbe, **dadurch gekennzeichnet, daß** die Trägerfolie (10) eine Kunststofffolie (12) aufweist, die bis 180°C stabil ist und mit einer Lackschicht (14) versehen ist.

2. Trägerfolie nach Anspruch 1,
**dadurch gekennzeichnet, daß** die Kunststofffolie (12) eine Polyesterfolie ist.

3. Trägerfolie nach einem der Ansprüche 1 oder 2,
**dadurch gekennzeichnet, daß** die Lackschicht (14) aus einem PVDF-Lack besteht.

4. Trägerfolie nach Anspruch 1,
**dadurch gekennzeichnet, daß** die Lackschicht (14) aus einem Lack der MF-Lackfamilie besteht.

5. Trägerfolie nach Anspruch 1,
**dadurch gekennzeichnet, daß** die Lackschicht (14) aus einem Lack der PF-Lackfamilie besteht.

6. Trägerfolie nach einem der vorhergehenden Ansprüche,
**dadurch gekennzeichnet, daß** die Lackschicht (14) eine Stärke im Bereich von 2 µm bis 8 µm, bevorzugt 3-4 µm, hat.

7. Verwendung einer Trägerfolie gemäß einem der Ansprüche 1 bis 6 zum Sublimieren von Farbe auf ein Substrat (18).
